# EUROPEAN PATENT APPLICATION

(11) **EP 3 995 714 A1**
(43) Date of publication of application: **11.05.2022**
(21) Application number: 21199950.3
(22) Date of filing: 29.09.2021
(51) Int. Cl.: F16C 35/02, F16C 35/077

(54) **BEARING MOUNT FOR A WASHING MACHINE**

(30) Priority: 06.11.2020 TR 202017754
(71) Applicant: Arçelik Anonim Sirketi, 34445 Istanbul (TR)
(72) Inventor: ATAGUN, Cahit, 34445 ISTANBUL (TR); AYDOGDU, Yunus Emre, 34445 ISTANBUL (TR); BALLI, Yasin, 34445 ISTANBUL (TR); AYAS, Recep, 34445 ISTANBUL (TR); FILIZ, Mecid, 34445 ISTANBUL (TR)

(57) **Abstract**

bearing mount (1) for a washing machine, the washing machine comprising a tub and a drum rotatable about a central axis (I), the bearing mount (1) comprising; two bearings spaced axially apart along the central axis to support the rotation of a shaft wherein a rib structure in waveform extending at least partly around the bearing mount, wherein the rib structure is configured to be close fittingly seated into an opening provided on the tub about a central axis so as to prevent relative motion between the bearing mount and the tub.

## Description

The present invention relates to a bearing mount, in particular to a bearing mount to be used in a washing machine.

The washing machines comprises a drum wherein the articles to be washed are placed. The drum comprises plurality of perforations so as to allow water freely circulate inside and outside the drum. The drum is confined by means of a tub, preferably made of a plastic material. The tub, along with seals, prevents the water from leaking out of the tub. During washing, drying and rinsing steps of the washing process, forces created by the motor is concentrated at the rear side of the tub. During said steps, different reasons may cause unbalanced weight which is undesired as it results in vibration and physical damage to the operational parts of the washing machine. An example of such a situation is wherein the user partially loads the washing machine, leaving most of the drum empty. In such cases, the load caused by the articles inside the drum and the tub is transmitted to the bearing mount and the rear face of the tub. It is vital that the bearing mount comprises a rib structure so as to divide the tension.

A prior art publication in the technical field of the present invention may be referred to as EP1950334A1 among others, the document disclosing a hose structure accommodating a pair of bearings.

A prior art publication in the technical field of the present invention may be referred to as US2015078695A1 among others, the document disclosing a washing machine having a tubular bushing co-moldable with tubs of washing machines.

A prior art publication in the technical field of the present invention may be referred to as WO2009089949A1 among others, the document disclosing a manufacturing method of a bearing support.

An objective of the present invention is to increase the contact area between the tub and the bearing mount, thereby decreasing the chance of physical damage to the tub and the bearing mount at high revolutions of the drum.

Another objective of the present invention is to provide a bearing mount having a reinforced structure.

The method realized to achieve the aim of the present invention and disclosed in the first claim and the dependent claims comprises a washing machine. The washing machine comprises a body and a door pivotably attached onto the body between a closed and an open position. During the open position of the door, the users may load the washing machine with articles to be washed. The washing machine comprises a drum and a tub concentric with the drum. The drum is configured to be rotated around a central axis. The central axis is the common central axis for the tub and the drum. The tub is produced from a synthetic material such as plastic. The tub in configured to be in a cylindrical shape and to surround the drum. The tub comprises a rear wall. The rear wall is located opposite to the door and the shaft of the motor passes through it. The motor shaft is seated inside a bearing mount provided on the rear wall. The rotational axes of the motor shaft and that of the bearing mount is common and coincides with the central axis. The bearing mount is placed onto the rear wall and accommodated two bearings. The said bearings hold the motor shaft and allows the shaft to rotate. Meanwhile, the tub remains stationary. The bearing mount is in cylindrical shape and comprises a rib structure in waveform extending at least partly around the bearing mount. The rib structure is configured to be seated in a recessed area provided on the rear surface of the tub. The waveform of the bearing mount is configured to match the shape of the opening. Therefore, the bearing mount is form fittingly inserted into the opening providing a rigid structure and prevents relative motion between the bearing mount and the tub.

In an embodiment of the invention, the rib structure comprises nodes. The nodes can be on the upper or on the lower side of the waveform. Said nodes are equidistant to the central axis and lie on a singular line concentric with bearing mount. The nodes being located on a singular line provides structural integrity and assures that the bearing mount and the tub can withstand uneven and high loads.

In an embodiment of the invention, the bearing mount comprises a support originating and extending away from the rib structure. The extension direction of the support is almost parallel to the central axis. The support provides structural integrity.

In an embodiment of the invention, the support and the rib structure are integral with the bearing mount. This helps decrease mold and manufacturing related costs and provides further structural support for the bearing mount.

In an embodiment of the invention, the bearing mount is produced from a metallic substance. This helps increase the life time of the bearing mount.

In an embodiment of the invention, the waveform of the rib structure is a triangular wave.

In another embodiment of the invention, the waveform of the rib structure is a sine wave.

In another embodiment of the invention, the waveform of the rib structure is a sawtooth pattern.

The waveform of the rib structure helps the bearing mount to be seated into the opening provided on the tub in a form fitting manner, thereby eliminating the relative motion between the bearing mount and the tub.

By means of the present invention, the bearing mount is seated into the opening provided on the tub in a form fitting and unmovable manner.

Another advantageous effect provided by means of the invention is that the relative motion between the bearing mount and the tub is prevented.

Another advantageous effect provided by means of the invention is that the waveform the rib structure possesses increases the seating area between the tub and the bearing mount.

The drawings are not meant to delimit the scope of protection as identified in the claims nor should they be referred to alone in an effort to interpret the scope identified in the claims without recourse to the technical disclosure in the description of the present invention.

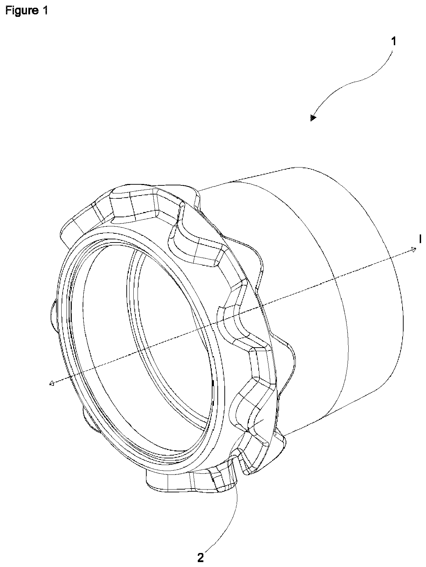

Figure 1 - is a perspective view of the bearing mount

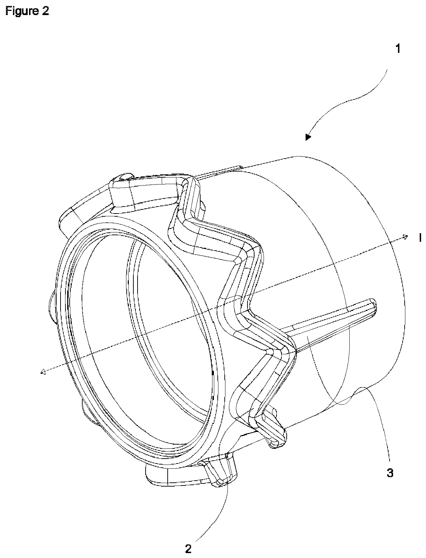

Figure 2 - is a perspective view of the bearing mount

The following numerals are assigned to different parts demonstrated in the drawings and referred to in the present detailed description of the invention:
1. Bearing mount
2. Rib structure
3. Support

The present invention relates to a bearing mount (1) for a washing machine, the washing machine comprising a tub and a drum rotatable about a central axis (I), the bearing mount (1) comprising; two bearings spaced axially apart along the central axis to support the rotation of a shaft.

In an embodiment of the present invention, a rib structure (2) is provided in waveform extending at least partly around the bearing mount (1), wherein the rib structure (2) is configured to be close fittingly seated into an opening provided on the tub about a central axis (I) so as to prevent relative motion between the bearing mount (1) and the tub. The bearing mount (1) comprises a bore through which the shaft of the motor passes. The bearing mount (1) comprises a pair of bearings spaced apart from each other inside the bearing mount (1). Said bearings are used to support the shaft of the motor inside the bearing mount (1) in a rotatable manner. The tub and the drum of the washing machine are rotatable about a central axis (I) wherein the said axis and the shaft are concentric. The bearing mount further comprises the rib structure (2) that is in the waveform and wherein the rib structure (2) extends at least partly around the bearing mount (1). The tub comprises the opening into which the rib structure (2) is seated. The shape of the opening on the tub is configured to match with the shape of the rib structure. Upon being placed into the tub, the rib structure (2) is form fittingly inserted into the opening thereby preventing relative motion between the bearing mount (1) and the tub. The waveform the rib structure (2) has provides a rigid placement of the bearing mount (1) onto the opening. During washing steps of the washing machine, the motor provides the rotation of the drum which causes a stress to be loaded onto the opening and the bearing mount (1). Thanks to the waveform the rib structure (2) possesses, relative motion between the rib structure (2) and the opening is prevented. Additionally, the waveform increases contact surface between the rib structure (2) and the opening thereby strengthening the connection between said parts.

In an embodiment of the present invention, the rib structure (2) comprises nodes which, collectively lie on a single circular line concentric to said bearing mount (1). The rib structure (2) comprises nodes. The nodes are located equidistant from the central axis (I) and provides structural support.

In an embodiment of the present invention, the bearing mount (1) comprises a support (3) originating and extending away from rib structure (2), wherein the support (3) is parallel to the central axis (I). The support (3) originates from the rib structure (2) and extends at least partly along an outer surface of the bearing mount (1). The support (3) provides structural support for the rib structure (2).

In an embodiment of the present invention, the rib structure (2) and the support (3) are integral with the bearing mount (1). By means of producing rib structure (2) and the support (3) as a single part, mold related costs are reduced. Additionally, integral structure provides structural support for the bearing mount (1).

In an embodiment of the present invention, the bearing mount (1) is produced from a metallic substance. Metal provides structural support for strong bearing mount (1). Additionally, production of parts made from a metal is easy to produce and they last longer.

In an embodiment of the present invention, the waveform is triangle.

In an embodiment of the present invention, the waveform is sine wave.

In an embodiment of the present invention, the waveform is sawtooth.

An advantageous effect provided by means of the bearing mount (1) is that the relative motion between the bearing mount (1) and the tub is prevented.

Another advantageous effect provided by means of the bearing mount (1) is that the waveform structure the bearing mount (1) possesses increases the seating area between the tub and the bearing mount (1).

## Claims

1. A bearing mount (1) for a washing machine, the washing machine comprising
a tub and a drum rotatable about a central axis (I), the bearing mount (1) comprising;
two bearings spaced axially apart along the central axis to support the rotation of a shaft;
**characterized by**
a rib structure (2) in waveform extending at least partly around the bearing mount (1), wherein the rib structure (2) is configured to be close fittingly seated into an opening provided on the tub about a central axis (I) so as to prevent relative motion between the bearing mount (1) and the tub.

2. A bearing mount (1) according to claim 1, **characterized in that** rib structure (2) comprises nodes which, collectively lie on a single circular line concentric to said bearing mount (1).

3. A bearing mount (1) according to any of the preceding claims, **characterized by** a support (3) originating and extending away from rib structure (2), wherein the support (3) is parallel to the central axis (I).

4. A bearing mount (1) according to claim 3, **characterized in that** the rib structure (2) and the support (3) are integral with the bearing mount (1).

5. A bearing mount (1) according to any of the preceding claims, wherein the bearing mount (1) is produced from a metallic substance.

6. A bearing mount (1) according to any of the preceding claims, wherein the waveform is triangle.

7. A bearing mount (1) according to claims 1 to 5, wherein the waveform is sine wave.

8. A bearing mount (1) according to claims 1 to 5, wherein the waveform is sawtooth.
